(19) Europäisches Patentamt

European Patent Office

Office européen des brevets

(11) EP 0 843 495 A2

(12) EUROPEAN PATENT APPLICATION

(43) Date of publication:
20.05.1998 Bulletin 1998/21

(51) Int. Cl.⁶: H04Q 7/26, H04Q 7/30, H04B 7/26

(21) Application number: 97119629.0

(22) Date of filing: 10.11.1997

(84) Designated Contracting States:
AT BE CH DE DK ES FI FR GB GR IE IT LI LU MC NL PT SE
Designated Extension States:
AL LT LV MK RO SI

(30) Priority: 19.11.1996 IT MI962412

(71) Applicant: Italtel s.p.a.
20149 Milano (IT)

(72) Inventor: Marnoni, Luca
21047 Saronno (VA) (IT)

(74) Representative: Giustini, Delio
c/o Italtel S.p.A.,
Cascina Castelletto
20019 Settimo Milanese (MI) (IT)

(54) **Method and system for the monitoring of the radio environment in a dect cordless system**

(57) This invention relates in general to solutions of application in the DECT system and in particular to a method adapted to monitor the radio environment and adapted furthermore to improve the management of the dummy channel in this type of systems.

The invention provides that each radio fixed station RFP switches off in sequential manner its own dummy channel in order to check if other neighbouring stations are using the same channel. If this check gives positive result in a generic RFP station, this station will choose, as dummy a channel, a channel not affected by interference which is different from the dummy channels of the neighbouring stations.

According to the invention, the instant in which the dummy channel is switched off to monitor the radio environment in a generic station is calculated by finding the coincidence between the MultiFrame Number MFN and a parameter derived from the number of radio fixed station RFP named RPN (Radio fixed Part Number).

Fig. 1

## Description

### Field of the invention

This invention relates in general to solutions of application in the DECT system and in particular to a method adapted to monitor the radio environment and adapted furthermore to improve the management of the dummy channel in this type of systems.

As known, the personal or cordless telephone system named DECT (Digital Enhanced Cordless Telecommunications) includes a plurality of transceiver radio fixed stations distributed to cover the areas involved, and connected with a switching network which may be of public or private type (PABX), and portable user apparatuses which are connected via radio with the fixed stations and are therefore capable of communicating with one another and with other fixed users connected with the telephone system. The connections may be of voice type, or permit data exchanges occupying the equivalent of one or more voice "channels".

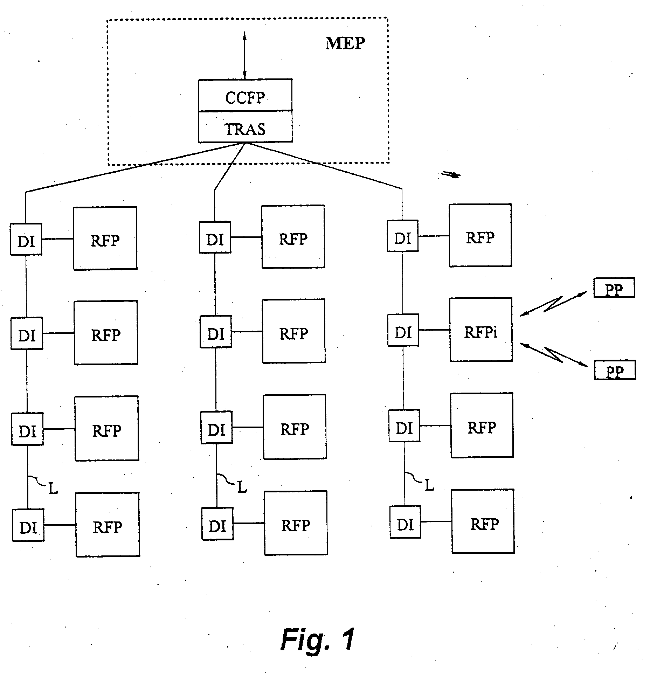

A first structure of DECT network is schematically illustrated as example in Figure 1.

It includes groups of h (in the example in the figure h = 4) radio fixed stations RFP (Radio Fixed Parts), preferentially connected with branches (in the example 3 branches) formed by connecting lines or "L" ridges by means of drop/insert DI devices. Without departing from the scope of the present invention it is obviously possible to star-connect each RFP station with the CCFP unit, eliminating the above mentioned ridges and therefore obviously also the drop/insert DI devices.

Each RFP may manage via radio a certain number of PP (Portable Part) users, generally mobile.

The branches lead to a group of transcoders TRAS, and the latter is connected with the public network PSTN (Public Switching Telephone Network) by means of a CCFP (Central Control Fixed Part) which is associated to a switching network or developed peripheral module MEP.

The interface between the CCFP and the DECT network, as regards the voice signal, is typically composed of 64 Kbit/s digital channels. Associated to the CCFP unit is a group of transcoders TRAS which converts the PCM (Pulse Code Modulation) code on eight bits used on the PSTN side into an ADPCM (Adaptive Differential Pulse Code Modulation) code on four bits used on the DECT side. In this way, two 32 Kbit/s channels face each 64 Kbit/s channel.

The 2,048 Mbit/s ridge (bidirectional) which connects the CCFP with the different RFPs therefore supports 48 vocal channels plus a pre-determined number of synchronism and signaling channels.

The area covered by a fixed station or cell is generally rather small, at the maximum covering a radius of some tens or hundreds of meters. Typical applications of the personal telephone systems are found in industrial installations where they may substitute the cabled network, in shopping or urban areas, where they may advantageously substitute public telephone booths and others.

The telecommunications network for personal telephones is of digital type. The radio access falls within the FDMA - TDMA - TDD category.

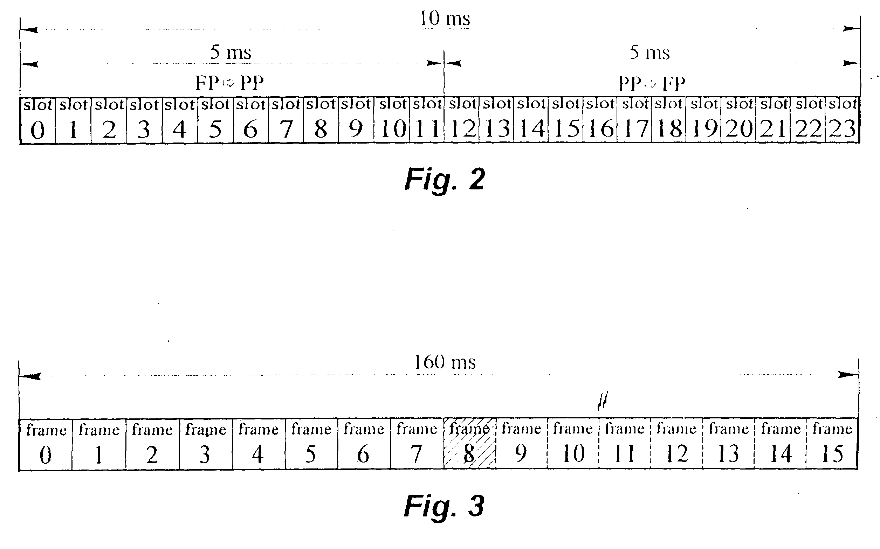

The system is of TDD (Time Division Duplex) type since the transmission and reception do not take place simultaneously. More precisely, as illustrated with reference to figure 2, the basic frame of 10 milliseconds is divided in two halves: usually in the first 5 ms the fixed station transmits and the portables receive (half-frame TX DECT for the fixed station and RX DECT for the portable), and in the next 5 ms the contrary takes place. Each half-frame is formed by 12 temporal or time slot channels (from which it derives that it is a TDMA system), each composed of 420 (or as necessary 424) bits. The time slot channels are transmitted or received using 10 (or more) different frequencies (from which it derives that it is a FDMA system) for a total of 120 (or more) channels available to the system, which are naturally allocated on each occasion in order not to create interference problems.

The multiframe DECT is illustrated in figure 3 and has a duration of 160 ms since it includes 16 frames of the type illustrated in figure 2 which, as mentioned above, have a duration of 10 ms.

In the DECT system each RFP must always be active at least on a bearer, i.e. it must present at least one channel of active traffic, for example:

- to broadcast system informations (carried inside channel Q);
- to broadcast the identity of RFP (carried inside channel N), and
- to broadcast paging informations (carried inside channel P).

If an RFP has at least one traffic channel active, these informations are broadcasted to all the PPs that are listening in the area served by this RFP. If instead an RFP has no active (or connectionless) traffic bearer, it must start a "beacon" channel, named dummy bearer, to guarantee the above mentioned broadcasting service.

All this enables each PP, which receives this information, to identify any RFP within its range and find the one which offers the best guarantees for the realization of an efficient set-up and for the best realization of a connection.

In fact, when the PP has recognised the system, it may synchronise/lock to the RFP with the strongest signal strength, presumably to the nearest one. In this state (so-called idle locked), the PP is able to receive a possible paging message coming from the network.

If the PP needs a connection with the system (as it wants to originate a call or in answer to a paging message coming from the network), the PP starts a set-up procedure using appropriate control messages carried inside the M channel.

The dummy channel is a simplex bearer and therefore only exists in downlink direction (in the direction FP $\Rightarrow$ PP).

As mentioned above, therefore, before starting transmission on a bearer, each RFP must select the physical channel (or channels) to use as beacon or dummy channel (when no real user traffic is in course) to permit the portables to identify any RFP inside its range and be connected with it with an efficient set-up.

Objects of the Invention

Is one object of this invention to identify a method which allows the choice of an uninterfered dummy channel in order to improve the operation of the system.

To better appreciate the advantages deriving from the method at the base of this invention, it should be noted that the portable apparatuses PP are capable of efficiently gaining access to the system only if the pre-chosen dummy channel is free from interference. In fact, if interference is present on this channel, the portables PP cannot carry out a synchronising/locking operation and therefore, in practice, to complete the connection set-up.

Summary of the Invention

The invention starts from the assumption that, to be able to establish if the interference, mainly but not exclusively caused by the adjacent stations, requires the choice of another dummy channel, it is necessary to have either a monitoring of the same channel or an updated list of the interference on the unoccupied channels.

According to the invention, as regards the monitoring of the dummy channel, the transmitter must switch off in order to measure the field strength (RSSI = Received Signal Strength Indicator) coming from the RFPs which are transmitting on the same time-interval. In particular, to avoid obtaining a synchronous monitoring for all the RFPs, which would prevent any detection of the reciprocal interference, the starting instant of the monitoring procedure of the radio environment is discriminated for RFP.

In other words, the invention provides that each RFP scans the radio environment, including the switching-off/monitoring of its dummy bearer channel, in different times from the other RFPs of the same FP, in order to check the effective interference caused by the neighbouring stations. If there is interference on the present dummy bearer channel, the RFP will choose as dummy a new channel with no interference.

According to the invention, the start of a monitoring cycle of the radio environment in an RFP is calculated by finding the coincidence between the MultiFrame Number, which as known is the same for all the RFPs belonging to the same FP (Fixed Part), or multiples of it, and the RFP number named RPN (Radio fixed Part Number) which identifies a single RFP across the whole FP.

According to the above, is object of this invention a method realised in compliance with the features of claim 1.

Is also object of this invention a device realised in compliance with the features of claim 10.

The features of the present invention which are believed to be novel are set forth with particularity in the appended claims.

Advantages of the Invention

Applying the teachings of this invention it is possible to obtain the advantage that each RFP, in sequential manner, has the possibility to check if the RFPs neighbouring it interfere with the dummy channel presently pre-chosen and to proceed with the adoption of a new dummy channel free from interference if this check gives positive result.

Brief description of the drawings

The invention, together with further objects and advantages thereof, may be understood with reference to the following description, taken in conjuction with the accompanying drawings, and in which:

figure 1, already described, shows the structure of a DECT system;
figure 2, already described, shows the framework of the DECT system shown in figure 1;
figure 3, already described, shows the structure of a multiframe of the DECT system shown in figure 1;
figure 4 shows a scanning matrix of the 120 physical channels available to the DECT system of figure 1.

Detailed description of a preferred form of implementation of the method according to the invention

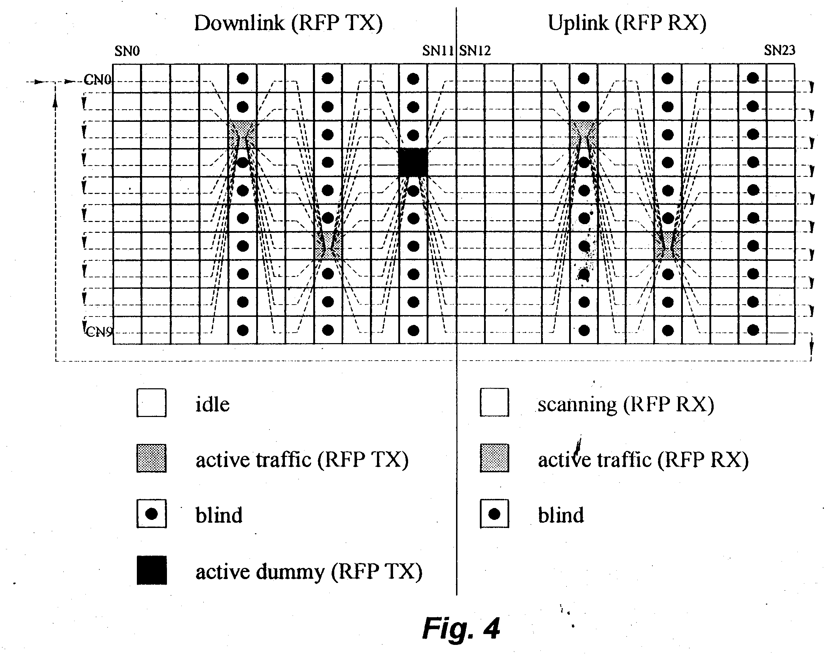

With particular reference to figure 4, to make the selection of the physical channel to be used as dummy channel, each RFP scans the above mentioned 12 x N (120 in the example in figure 4) channels available to the system. In fact, the structure of the DECT frame as shown in figure 2 provides that the 24 time slots (12 in uplink and 12 in downlink) of an RFP may be allocated in combination with any one of the N (10 in the example in figure 4) assigned radio frequency (RF) carriers.

There is therefore a total number of duplex channels (TDD pair), intended as combination of a pair of evenly spaced time slots (i.e. the starting points of the time slots are separated by 0,5 frame) and a radio frequency carrier, equal to 12 x N channels.

Only 12 of these potential channels may be simultaneously active when the RFP is equipped with only one transceiver. In fact, if the receiver of this RFP is active in a particular time slot on a certain RF carrier, it cannot listen/receive in the time interval defined by that slot on the other carriers. This leads to the definition blind slot.

In the sphere of the above mentioned scan in each slot, the RFP receiver may be in one of the following operative states:

- Active $\Rightarrow$ if it is receiving a traffic bearer;
- Scanning $\Rightarrow$ when it is listening for a possible bearer set-up attempt on that channel;
- Idle $\Rightarrow$ it implies that the RFP is not waiting/scanning for any (more) bearer set-up attempts on that channel. The receiver is (almost automatically) idle when the RFP transmits.

The primary scan is defined as the receiver scan that is maintained if the RFP has a receiver free. By the primary scan all available RF carriers/frequencies shall be scanned in sequence at a rate, of one carrier per DECT frame in increasing order (CNi, CNi+1, CNi+2, ...). The scan is made in cycles so that, after having scanned the carrier at lower frequency (CN9 in the example in figure 4) RFP restarts the carrier scan at higher frequency (CN0). A complete scan cycle of the 10 basic frequencies is therefore carried out in 100 msec.

In figure 4 the scanning sequence of the "matrix" of the 120 physical channels is schematised (broken line).

The scan for the unlink half-frame provides that the receiver is always in scan, apart from the blind slots and traffic slots.

In the downlink half-frame the receiver is idle while the transmitter is active both for the traffic and for the dummy bearers.

From the figure it is evident that for all the slots in which an active channel (active traffic or active dummy) is allocated, the regular flow of the scan is modified. In fact, in these time intervals, the RF carrier is always fixed and a frequency hop from the carrier in scan to the carrier of the active channel is thus necessary.

Prior to the first transmission on any bearer, each RFP have to select the physical channel, analysing the contents of a table/list in which the channels shall be ordered according to the measured field strength (RSSI, Received Signal Strength Indicator).

The table is organised in bands enclosed between a minimum and a maximum value of the field strength. The channels with RSSI measurement below the minimum value are considered quiet and may be selected immediately, while those with an RSSI measurement above the maximum value are considered busy and shall not be selected. The channels with an RSSI measurement which lies between these two boundaries (minimum and maximum) shall be ordered according to their band.

On completion of the channels list/table, interference is checked and the dummy channel possibly moved selecting it from the above mentioned list/table.

According to the invention the monitoring procedure of the radio environment provides the execution in sequence of the following steps:

- a) wait for the start of the next multiframe whose number satisfies the condition:

$$MFN_{mod\,K} \times C1 = RPN - C2,$$

where,

i) MFN (MultiFrame Number) is the multiframe number or a number which guarantees that the fixed radio station RFP and the mobile radio station PP are aligned as regards multiframe information,

ii) RPN (Radio fixed Part Number) is the number which identifies each RFP station and is represented with n bits (n=3 for DECT application in small residential and private environments, n=8 for all the other DECT applications,

iii) K is the maximum number of RFPs connectable in each FP (K = $2^{n-1}$ = $2^{8-1}$ = $2^7$ = 128 for DECT applications in public environment where the even values of RPN are reserved to single cell systems, K = $2^n$ - $2^8$ = 256 for DECT applications in complex private environment, K = $2^n$ - 1 = $2^3$ - 1 = 7 for DECT applications in small residential and private environments where the value RPN = 0 is reserved to single cell systems,

iv) C1 is a whole number over zero and C2 is a whole number over or equal to zero. The value of these numbers will be adopted in order to garantee that each RFP perform the monitoring radio cycle in different time intervals. The value of these numbers will be therefore a function of the time required to perform a radio monitoring cycles and of the desired repetition rate of said monitoring cycles;

b) start in each RFP the radio monitoring cycle, including the switching-off/monitoring of its dummy channel, in the instant in which the coincidence specified in the step a) is checked;

c) measure in each RFP the received field strength (RSSI);

d) compile in each RFP a new list/table of the channels;

e) select the physical channel to which the dummy function may be potentially associated.

Always according to the invention, once this procedure has been carried out, it is repeated in cycles, at intervals equal to $T_{monitor}$ (where $T_{monitor}$ = K multiframes) in order to assess the possibility of moving/change a dummy channel. This movement is subject to the check of a possible interference.

The checking procedure of the interfered dummy and selection of a new dummy bearer is repeated in cycles at intervals equal to

$$T_{check} = W \times T_{monitor},$$

where W is a whole number over zero which makes it possible to vary the implementation of this procedure.

In other words, this procedure consists in checking periodically if the physical channel selected in phase e) belongs to a band worse than or equal to the band in which the present dummy channel is allocated. If the check is positive the latter is maintained, if negative the dummy channel is moved to the selected physical channel which from the check it results as less interfered.

During the movement step of the dummy, the simultaneous presence of the two dummies (old and new) is permitted and hoped for a predetermined time interval, however not exceeding 4 multiframes.

Therefore, while a particular embodiment of the present invention has been shown and described, it should be understood that the present invention is not limited thereto since other embodiments may be made by those skilled in the art without departing from the scope thereof. It is thus contemplated that the present invention encompasses any and all such embodiments covered by the following claims.

**Claims**

1. Method for the monitoring of the radio environment in a DECT cordless system of the type including a plurality of radio fixed transceiver stations or Radio Fixed Parts (RFPs) which are connected with at least one switching network through a fixed part (FP) and are connected via radio with portable parts (PPs), said fixed part (FP) sending to said radio fixed transceiver stations (RFPs) a parameter named multiframe number (MFN) and each radio fixed transceiver station (RFP) including a counter which generates a DECT radio multiframe of predetermined duration, characterized by the fact that it provides the execution in sequence of the following steps:

   - a) waiting for the start of the next multiframe whose number satisfies the condition:

   $$MFN_{mod\,K} \times C1 = RPN - C2,$$

   where,

   • MFN (Multi Frame Number) is the multiframe number, a number which serves to guarantee that the radio fixed transceiver station (RFP) and the portable parts (PPs) are aligned for everything concerning the multiframe information,
   • RPN (Radio fixed Part Number) is the number which identifies each fixed transceiver station (RFP) and is represented with n bits,
   • K is the maximum number of fixed transceiver stations (RFP) connectable to each fixed part (FP),
   • C1 is a whole number over zero and C2 is a whole number over or equal to zero;

   - b) starting in each radio fixed transceiver station (RFP) the radio monitoring cycle, including the switching-off/monitoring of its own dummy channel, in the instant in which the coincidence specified in the step a) takes place;
   - c) measuring in each radio fixed transceiver station (RFP) the received signal strength (RSSI);
   - d) compiling in each radio fixed transceiver station (RFP) a new list/table of the channels;
   - e) selecting among the less interfered channels the physical channel to which to potentially associate the dummy function.

2. Method as claimed in claim 1, characterized by the fact that the above mentioned steps from a) to e) are repeated in cycles at intervals equal to

   $$T_{monitor} = K \text{ multiframes.}$$

3. Method as claimed in claims 1 and 2, characterized by the fact that the above mentioned number K is equal to 128.

4. Method according to claims 1 and 2, characterized by the fact that the above mentioned number K is equal to 256.

5. Method according to claims 1 and 2, characterized by the fact that the above mentioned number K is equal to 7.

6. Method according to claim 1, characterized by the fact that the above mentioned number n is equal to 3.

7. Method according to claim 1, characterized by the fact that the above mentioned number n is equal to 8.

8. Method according to claim 1, characterized by the fact that it also provides the step of performing a check on the interfered dummy and selection of a new dummy bearer obtained from the above mentioned step e) when the latter belongs to a less interfered band.

**9.** Method according to claim 8, characterized by the fact that the checking procedure is repeated at time intervals equal to

$$T_{check} = W \times T_{monitor},$$

where W is a whole number over zero.

**10.** Monitoring system of the radio environment in a DECT cordless system of the type including a plurality of radio fixed transceiver stations or Radio Fixed Parts (RFPs) which are connected with at least one switching network through a fixed part (FP) and are connected via radio with portable parts (PPs), said fixed part (FP) sending to said radio fixed transceiver stations (RFPs) a parameter named multiframe number or MFN and each radio fixed transceiver station including a counter which generates a DECT radio multiframe of predetermined duration, characterized by the fact that each radio fixed transceiver station (RFP) includes means adapted to:

- monitoring the radio environment, including the switching-off/monitoring of its dummy bearer channel, to check if the neighbouring stations are using the same channel, said switching-off/monitoring taking place when the following condition occurs:

$$MFN_{mod\,K} \times C1 = RPN - C2,$$

where,

   i) MFN (MultiFrame Number) is the multiframe number or a number which serves to guarantee that the radio fixed transceiver station (RFP) and the portable parts (PPs) are aligned for everything concerning the multiframe information,
   ii) RPN (Radio fixed Part Number) is the number which identifies each radio fixed transceiver station (RFP) and is represented with n bits,
   iii) K is the maximum number of radio fixed transceiver station (RFP) connectable to each fixed part (FP),
   iv) C1 is a whole number over zero and C2 is a whole number over or equal to zero;

- measuring in each radio fixed transceiver station (RFP) the received field strength (RSSI);
- compiling in each radio fixed transceiver station (RFP) a new list/table of the channels;
- selecting among the less interfered channels the physical channel to which to potentially associate the dummy function.

**Fig. 1**

EP 0 843 495 A2

10 ms

5 ms

5 ms

FP ⇨ PP

PP ⇨ FP

| slot | slot | slot | slot | slot | slot | slot | slot | slot | slot | slot | slot | slot | slot | slot | slot | slot | slot | slot | slot | slot | slot | slot | slot |
|---|---|---|---|---|---|---|---|---|---|---|---|---|---|---|---|---|---|---|---|---|---|---|---|
| 0 | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 |

**Fig. 2**

160 ms

| frame | frame | frame | frame | frame | frame | frame | frame | frame | frame | frame | frame | frame | frame | frame | frame |
|---|---|---|---|---|---|---|---|---|---|---|---|---|---|---|---|
| 0 | 1 | 2 | 3 | 4 | 5 | 6 | 7 | 8 | 9 | 10 | 11 | 12 | 13 | 14 | 15 |

**Fig. 3**

Downlink (RFP TX)          Uplink (RFP RX)

SN0          SN11 SN12          SN23

CN0

CN9

idle          scanning (RFP RX)

active traffic (RFP TX)          active traffic (RFP RX)

● blind          ● blind

■ active dummy (RFP TX)

**Fig. 4**

EP 0 843 495 A2